# FASCICULE DE BREVET EUROPEEN

(11) **EP 3 602 032 B1**
(45) Date de publication et mention de la délivrance du brevet: **07.12.2022**
(21) Numéro de dépôt: 18715783.9
(22) Date de dépôt: 22.03.2018
(51) Int. Cl.: G01N 29/14, G10K 11/16, G01N 29/22, G01M 17/02, B60W 40/06, B60R 11/02, B60T 8/172, G10K 11/00

(54) **SYSTÈME DE MESURE PHONIQUE POUR VÉHICULE AUTOMOBILE**
SCHALLMESSSYSTEM FÜR EIN KRAFTFAHRZEUG
SOUND MEASUREMENT SYSTEM FOR A MOTOR VEHICLE

(30) Priorité: 24.03.2017 FR 1752484
(43) Date de publication de la demande: 05.02.2020
(73) Titulaire: COMPAGNIE GENERALE DES ETABLISSEMENTS MICHELIN, 63000 Clermont-Ferrand (FR)
(72) Inventeur: LINDA, Jean-Louis, 63530 Sayat (FR); AUGUET, Thierry, 63040 Clermont-Ferrand Cedex 9 (FR); GRANDJEAN, Sylvain, 63040 Clermont-Ferrand Cedex 9 (FR)
(74) Mandataire: Roussy, Delphine
(86) Numéro de dépôt international: PCT/FR2018/050697
(87) Numéro de publication internationale: WO 2018/172706

(56) Documents cités:
- EP-A1- 2 343 522
- DE-C1- 4 235 809
- FR-A1- 2 999 997
- US-A- 5 586 028

## Description

### DOMAINE DE L'INVENTION

La présente invention se situe dans le domaine des véhicules automobiles et de leurs accessoires. Plus particulièrement, l'invention concerne un système de mesure installé sur un véhicule, permettant l'acquisition d'informations pertinentes pour la détermination d'un état de la route et /ou du pneumatique.

Avec le développement des systèmes d'aide à la conduite et des véhicules autonomes, il apparaît utile de pouvoir déterminer, en temps réel, les conditions de roulage du véhicule. Parmi ces conditions de roulage, on peut citer notamment l'état de la route, et en particulier son état météorologique. Par état météorologique, on entend par exemple, un état sec, un état humide, un état mouillé, ou bien encore un état séchant. En effet, l'état météorologique de la route a une influence forte sur l'adhérence des pneumatiques sur le sol, et donc sur le comportement du véhicule en situation de roulage, par exemple en termes de distance de freinage, de risque d'aquaplanage ou encore de perte de contrôle. Les conditions de roulage peuvent également concerner l'état de texture de la route, l'usure des pneumatiques, ou tout autre élément ayant une influence sur l'adhérence des pneumatiques sur le sol.

On connaît, dans l'état de la technique, des véhicules équipés de caméras qui permettent de capter l'aspect visuel de la route en temps réel et d'en déduire son état météorologique, par analyse d'image. Toutefois, on a constaté que ces caméras ne permettaient pas une détection fiable dans toutes les conditions, car l'aspect visuel de la route est parfois modifié par le type de revêtement au sol ou bien encore la luminosité.

On a ainsi développé des systèmes permettant une détermination de l'état de la route basée sur l'analyse d'enregistrements sonores réalisés par des microphones disposés à proximité du pneumatique et de la route. Toutefois, on a constaté qu'il était difficile d'intégrer un microphone dans l'environnement difficile proche de la roue (compacité, projections (eau, salissures), vibrations, turbulences, ...) en conservant un rapport signal / bruit exploitable pour déterminer les états recherchés et décrit plus haut.

Les documents de brevet FR 2 999 997 A1, US 5 586 028 A1, EP 2 343 522 A1 et DE 42 35 809 C1 décrivent des systèmes de mesure phonique de ce type.

La présente invention vise donc à proposer un système de mesure permettant de remédier à tout ou parties des inconvénients précités La présente invention vise en outre à proposer un système dont l'accrochage sur un véhicule est rendu possible de manière simplifiée.

Ainsi, la présente invention concerne un système de mesure phonique selon la revendication 1.

Un tel système de mesure est destiné à analyser les bruits d'un pneumatique au niveau du contact avec le sol ou de manière plus générale les bruits consécutifs au roulement du pneumatique sur le sol, qui comprennent également le bruit des projections d'eau, par exemple. Le système de mesure est donc avantageusement destiné à être installé à l'extérieur du véhicule. Les matériaux choisis seront donc tels qu'ils puissent résister aux conditions extérieures, en termes de température, pluie, vent...En outre, les dimensions du système de mesure seront avantageusement choisies afin de permettre un positionnement pertinent sur le véhicule, qui sera ultérieurement décrit.

Les bruits à analyser sont situés dans le domaine de fréquences compris entre 100 et 20000 Hz. Afin d'éviter que les mesures ne soient faussées par des pollutions sonores générées par le système de mesure en lui-même, on dimensionnera l'ensemble des éléments, notamment l'embase amortissante, le support polygonal et le capot de protection, de façon que les bruits solidiens et aériens créés par ces éléments soient repoussés au maximum en dehors des fréquences d'intérêt.

Dans un mode de réalisation particulier, l'élément de support du microphone, parfois nommé porte-micro, comprend un siège polygonal circonscrit à un cône. Ceci permet d'orienter et positionner de manière répétitive le microphone de différentes façons par rapport au système de mesure, selon le mode d'installation du système. Ce siège polygonal circonscrit à un cône permet encore de le bloquer précisément une position du microphone avec une seule vis, par un effet de coincement, et sans outil de positionnement extérieur. En effet, un tel système de mesure peut être installé à différents emplacements sur le véhicule, par exemple dans les systèmes de passage de roue avant et/ou arrière. Dans ces deux cas, l'axe du support de micro est de préférence horizontal, mais pas nécessairement, c'est-à-dire parallèle à l'axe de l'essieu, avec un positionnement perpendiculaire de la membrane de mesure sonique. Le siège polygonal circonscrit à un cône permet d'orienter le micro dans un plan de plongée directement derrière le pneumatique, pour viser la zone de contact entre le pneumatique et le sol, et ainsi obtenir les meilleurs résultats. On peut ainsi facilement retrouver la même position et la même orientation du microphone, même après plusieurs démontages et remontages du microphone.

Le système de mesure doit non seulement être positionné le plus proche possible de la source de bruit, mais il est également utile qu'il soit le moins souillé possible par les projections diverses (eau, poussières, neige, ...). A cet effet, en plus des protections existantes (pare-boue) dans les passages de roue de la plupart des véhicules existants, les moyens mécaniques de protection comprennent un capot de protection comprenant :
- Un déflecteur installé entre le microphone et la source de bruit,
- Des aubes, qui seront ultérieurement décrites, et
- Des colonnes, parallèles au support de micro, et offrant une protection, comme sera ultérieurement décrit.

Ces éléments, utilisés seul ou en combinaison, permettent de freiner toutes intrusions d'eau ou de saletés dans le système de mesure, dans une succession de chicanes constituées par le capot de protection et le support de micro, et ainsi de protéger le foyer de mesure sonique des projections diverses. En effet, le dépôt de gouttelettes d'eau ou de saletés sur tout ou partie de la membrane de mesure du microphone modifierait la fonction de transfert de la mesure du son, et conduirait à des mesures fausses.

En outre, l'utilisation de ces éléments permet d'offrir une protection du microphone sans qu'il soit nécessaire de l'enfermer dans une cavité fermée vis-à-vis de l'extérieur. En effet, on a constaté que l'installation dans une telle cavité conduisait à l'émergence de modes acoustiques de cavité, qui avaient une influence sur le signal sonore mesuré par le microphone, et qui risquaient donc de fausser les résultats de la mesure.

Dans un mode de réalisation, les moyens mécaniques de protection comprennent des œillères latérales installés sur l'élément de support du microphone. Ces œillères permettent de renforcer la protection face aux projections, en faisant office de parapluie et en détournant les écoulements d'eau de part et d'autre du capteur sonore.

Selon l'invention, le système comprend en outre des moyens mécaniques de protection du microphone face aux bruits transmis par conduction solidienne, et provenant du véhicule, et/ou de ses accessoires et/ou d'un élément du système de mesure.

Selon l'invention, le système comprend en outre des moyens de fixations à la carrosserie d'un véhicule automobile. Ces moyens seront ultérieurement détaillés à l'aide des figures.

Ainsi, un système de mesure selon l'invention permet de répondre avantageusement à différentes exigences destinées à permettre l'acquisition d'un signal acoustique correctement exploitable:
- Limiter la taille du système de mesure pour l'intégrer aisément dans un passage de roue de véhicule standard,
- Minimiser les volumes provoquant potentiellement des bruits de cavité,
- Réduire le souffle aérien autour du dispositif de mesure, généré par le déplacement du véhicule, pour en minimiser l'ombre sonore sur le micro,
- Protéger le micro de toutes les projections d'eau et salissures pouvant venir du roulage sur sol mouillé ou poussiéreux,
- Isoler le système de mesure sonique (embase, capot, support et micro) des vibrations solidiennes du véhicule, particulièrement dans le domaine des basses fréquences
- Repousser les fréquences propres mécaniques du capot de protection et de l'ensemble du système en dehors des fréquences d'intérêt.

L'invention concerne également un véhicule automobile comprenant un ou plusieurs systèmes de mesure sur l'invention, installé sur la carrosserie du véhicule, à proximité d'une roue avant ou arrière, par exemple dans un passage de roue.

### BREVE DESCRIPTION DES FIGURES

D'autres objectifs et avantages de l'invention apparaîtront clairement dans la description qui va suivre d'un mode de réalisation préféré mais non limitatif, illustré par les figures suivantes qui représentent différentes vues et différentes configurations d'un système selon l'invention :
- les figures la à 1g montrent un système selon l'invention installé sur un passage de roue avant d'un véhicule,

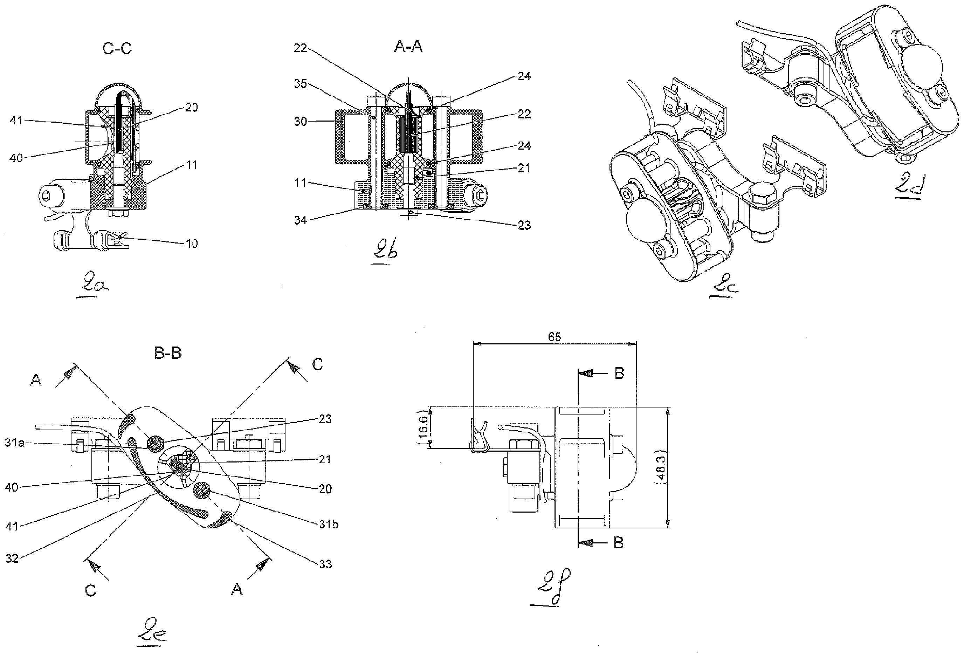

- les figures 2a à 2f montrent un système selon l'invention installé sur un passage de roue arrière d'un véhicule,

### DESCRIPTION DU MEILLEUR MODE DE REALISATION DE L'INVENTION

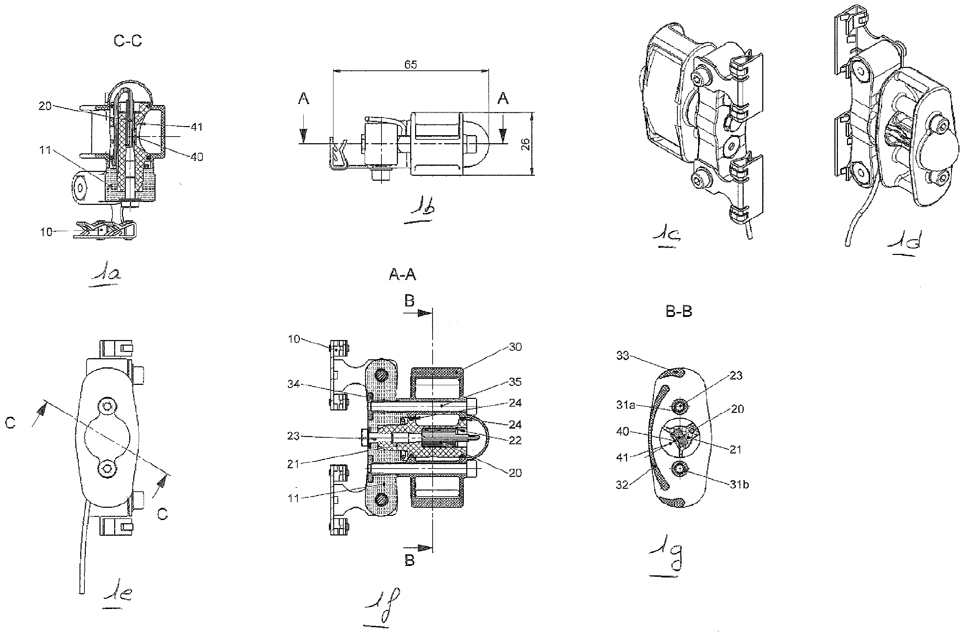

Les ensembles de figures 1 et 2 montrent deux cas d'intégration d'un système selon l'invention sur un véhicule automobile.

Dans les deux cas, le système est fixé sur des nervures de soudage du châssis véhicule au niveau des passages de roue. Chaque système est fixé par deux éléments de fixation, chaque élément comportant des griffes métalliques 10 permettant un accrochage sur la nervure métallique, et un support muni d'un orifice de vissage permettant l'accrochage du boitier principal du système de mesure. Le support et les griffes métalliques sont rendus solidaires, ou forment une pièce unique. Ils peuvent être alignés ou former un angle, par exemple de l'ordre de 90°comme montré sur les figures.

Dans le cas d'une intégration au niveau du passage de roue avant, montrée en figures 1a à 1g, les griffes sont par exemple positionnées sur la nervure localement verticale puis oblique située juste derrière la roue dans le passage de roue avant. Afin de pouvoir se loger dans l'espace disponible entre la nervure de soudage du passage de roue avant et la protection plastique qui le capitonne, également appelé pare-boue, il est utile de limiter l'épaisseur de notre système de mesures à une valeur située entre 20 et 300 mm hors tout.

Dans le cas d'une intégration au niveau du passage de roue arrière, montrée en figures 2a à 2f, les griffes sont par exemple positionnées sur la nervure horizontale située juste derrière la roue, juste après le passage de roue arrière.

Le microphone 20 est installé sur un support de microphone 21 polygonal. Le système comprend un capot de protection 30, lui-même composé de deux colonnes 31a et 31b permettant le passage des vis de fixation, un déflecteur 32 avec deux aubes 33 à ses extrémités. Après avoir orienté le microphone en direction de la source sonore, on prendra soin de placer le capot de protection asymétrique avec le déflecteur devant la membrane du capteur phonique, soit le dos du micro tourné vers l'ouverture du capot de protection. Ainsi positionné, le microphone (toujours logé entre les deux colonnes des vis de fixation) se trouve dans un espace généreux, non fermé (faible bruit de cavité) et protégé des projections extérieures. Le microphone est toutefois en contact direct avec l'extérieur via un canal aéraulique 40 aménagé dans le porte micro. Ce canal aéraulique se compose d'une section cylindrique, située juste devant le micro, et qui présence un diamètre légèrement supérieur au diamètre de l'élément sensible du microphone, par exemple un diamètre de 5.80 mm, soit 116% du diamètre du micro, et une longueur d'environ 0.5 mm. Le canal 40 débouche ensuite sur un pavillon asymétrique 41. Ce pavillon présente des angles de fuite par exemple entre 80° et 120°, et conduit à un diamètre moyen d'entrée par exemple 16.2 mm, soit environ 320% du diamètre du micro, aménagé dans le porte- micro lui-même. Ce pavillon aide également physiquement à amplifier la mesure acoustique et assurent une certaine directivité

Comme précédemment indiqué, un système selon l'invention vise à limiter les pollutions sonores et physiques qui pourraient altérer les mesures effectuées par le microphone. Les moyens mis en œuvre pour atteindre cet objectif apparaissent sur les figures.

Ainsi, les effets de souffle aérien qui pourraient être créés aux extrémités du déflecteur 32 sont atténués par des aubes 33 qui créent des canaux secondaires entre l'intérieur et l'air autour du capot de protection 30. Ces canaux secondaires créent un flux intermédiaire et se faisant réduisent le différentiel de vitesses, donc les turbulences qui en découlent et au final le bruit qui lui correspond. Les rayons de courbures importants des bords d'attaque des aubes et du déflecteur doivent également favoriser un écoulement laminaire à cet endroit et retarder, autant que possible, le décrochage des filets d'air, c'est à dire l'apparition de turbulences et donc de bruits. L'efficacité de ses aubes 33 dépend de l'angle d'incidence du flux d'air extérieur sur le capot de protection 30.

D'un autre côté, nous avons déjà décrit certains moyens qui permettent d'éviter les projections d'eau ou les salissures. Toutefois, ces moyens ne peuvent pas garantir à 100% l'étanchéité. Pour remédier à cela, dans un exemple, les surfaces des chicanes du déflecteur 32 et du support de micro 21 sont soit obliques ou curvilignes afin de permettre l'évacuation par écoulement gravitaire de toutes les gouttes de liquides qui auraient été projetées ou qui auraient condensées à l'intérieur des chicanes.

Dans l'exemple où le système est installé au niveau du passage de roue avant du véhicule, le déflecteur 32 est placé parallèlement à une nervure verticale ou oblique pour assurer une bonne évacuation par écoulement. Dans le cas de l'intégration arrière, la cloche a été placée obliquement par exemple à 45° par rapport à une nervure horizontale, pour garantir cet écoulement.

L'ensemble des éléments du système de mesure sont réalisés en des matériaux plastiques hydrophobes, adapté aux applications extérieures, utilisable entre -30°C et +50°C et résistant aux chocs. De manière préférentielle, on choisira un matériau qui est également résistant aux hydrocarbures, puisque la position du système de mesure le rend sujet à d'éventuelles projections. Ainsi, on choisira par exemple un matériau compris dans le groupe comprenant : polyéthylène, poly méthacrylate de méthyle, poly téréphtalate d'éthylène, résines époxy, polycarbonate, et Polytétrafluoroéthylène.

En outre, on sait que le châssis du véhicule est soumis à de nombreuses vibrations provenant notamment de la route et des moteurs de tractions (thermique et électrique). Pour amortir la transmission de ces vibrations solidiennes vers notre système de mesures, particulièrement dans les basses fréquences, il est utile d'utiliser des matériaux élastiques pour les embases amortissante 11, entre le châssis, le porte-microphone 21 et le capot de protection 30. En outre, des joints annulaires en élastomère, d'une dureté de par exemple 60 à 70 Shores A, séparent encore le capot du porte-micro. On précise ici que La dureté shore A des compositions après cuisson est appréciée conformément à la norme ASTM D 2240-86. Les termes dureté et rigidité seront utilisés indifféremment dans la suite de la description.

Enfin, dans un exemple de réalisation, l'embase amortissante 11 a été réalisée en résine acrylate (proche des élastomères) de rigidités différentiées entre sa partie centrale et ses attaches de fixation aux extrémités. L'embase amortissante 11 a été réalisée avec un noyau central (siège du support de micro et logements des écrous de fixation du capot de protection) relativement rigide d'une dureté de par exemple 95 Shore A, et des attaches de fixation plus souples d'une dureté de 50 Shore A environ. Si l'on choisissait pour cette pièce une fabrication qui exige de revenir à des matériaux homogènes, il faudrait modifier sa construction par une pièce centrale rigide, à laquelle deux embouts souples viendraient être rattachées. Ces attaches amortissantes sont préférentiellement conçues en utilisant des élastomères hydrophobes, adaptés aux applications extérieures et véhicules et utilisables entre -30°C et +50°C. Ainsi, on utilisera par exemple du butadiène-acrylonitrile, ou du caoutchouc chloroprène.

## Revendications

1. Système de mesure de bruits consécutifs au roulement d'un pneumatique sur un sol, destiné à être installé sur un véhicule automobile, le système comprenant :
• Un microphone (20) pour mesurer les bruits consécutifs au roulement d'un pneumatique sur un sol,
• Un élément de support du microphone (21),
• Des moyens mécaniques de protection du microphone contre les projections provenant de l'environnement du véhicule et des bruits aériens provenant du cheminement de l'onde sonore entre la source et la mesure ainsi que de l'environnement du système de mesure, ces moyens comprenant un capot de protection (30) composé d'un déflecteur (32) avec deux aubes (33) à ses extrémités, positionné de façon telle à créer des canaux secondaires permettant au microphone d'être en contact direct avec l'air autour du capot de protection,
• Des moyens mécaniques de protection du microphone face aux bruits transmis par conduction solidienne, et provenant du véhicule, comprenant une embase amortissante (11) à rigidités différentiées entre sa partie centrale et ses attaches de fixation aux extrémités, et
• Des griffes métalliques (10) pour l'accrochage du système sur une nervure métallique du châssis véhicule.

2. Système de mesure selon la revendication 1, dans lequel l'élément de support du microphone comprend un siège polygonal circonscrit à un cône.

3. Système de mesure selon l'une des revendications précédentes dans lequel les moyens mécaniques de protection contre les projections comprennent des œillères latérales installés sur l'élément de support.

4. Véhicule automobile comprenant un système de mesure phonique selon l'une des revendications précédentes installé sur la carrosserie du véhicule, à proximité d'une roue avant du véhicule

5. Véhicule automobile comprenant un système de mesure phonique selon l'une des revendications 1 à 3 installé sur la carrosserie du véhicule, à proximité d'une roue arrière du véhicule.

6. Véhicule automobile comprenant au moins deux systèmes de mesure phonique selon l'une des revendications 1 à 3, installés sur la carrosserie du véhicule, à proximité d'une roue avant et/ou arrière.

## Patentansprüche

1. System zur Messung von Geräuschen aufgrund des Rollens eines Luftreifens auf einem Boden, das dazu bestimmt ist, auf ein Kraftfahrzeug montiert zu werden, wobei das System enthält:
• ein Mikrofon (20) zur Messung der Geräusche aufgrund des Rollens eines Luftreifens auf einem Boden,
• ein Trägerelement des Mikrofons (21),
• mechanische Einrichtungen zum Schutz des Mikrofons gegen die aus der Umgebung des Fahrzeugs stammenden Spritzer und Luftgeräusche, die vom Fortschreiten der Schallwelle zwischen der Quelle und der Messung sowie von der Umgebung des Messsystems stammen, wobei diese Einrichtungen eine Schutzhaube (30) enthalten, die aus einer Ablenkplatte (32) mit zwei Flügeln (33) an ihren Enden besteht, die so positioniert ist, dass Sekundärkanäle erzeugt werden, die es dem Mikrofon ermöglichen, direkt mit der Luft um die Schutzhaube herum in Kontakt zu sein,
• mechanische Schutzeinrichtungen des Mikrofons gegenüber den durch Körperschallleitung übertragenen und vom Fahrzeug kommenden Geräuschen, die einen Dämpfungssockel (11) mit unterschiedlichen Steifigkeiten zwischen seinem mittleren Bereich und seinen Befestigungsklammern an den Enden enthalten, und
• metallische Klemmvorrichtungen (10) zur Befestigung des Systems an einer metallischen Rippe des Fahrzeugrahmens.

2. Messsystem nach Anspruch 1, wobei das Trägerelement des Mikrofons einen polygonalen Sitz enthält, der auf einen Konus beschränkt ist.

3. Messsystem nach einem der vorhergehenden Ansprüche, wobei die mechanischen Schutzeinrichtungen gegen die Spritzer seitliche Klappen enthalten, die auf das Trägerelement montiert sind.

4. Kraftfahrzeug, das ein Schallmesssystem nach einem der vorhergehenden Ansprüche enthält, das auf die Karosserie des Fahrzeugs in der Nähe eines Vorderrads des Fahrzeugs montiert ist.

5. Kraftfahrzeug, das ein Schallmesssystem nach einem der Ansprüche 1 bis 3 enthält, das auf die Karosserie des Fahrzeugs in der Nähe eines Hinterrads des Fahrzeugs montiert ist.

6. Kraftfahrzeug, das mindestens zwei Schallmesssysteme nach einem der Ansprüche 1 bis 3 enthält, die auf die Karosserie des Fahrzeugs in der Nähe eines Vorderrads und/oder Hinterrads montiert sind.

## Claims

1. Sound measurement system intended to be installed on a motor vehicle, the system comprising:
• a microphone (20) to measure noises incurred by the rolling of a tire on a ground,
• an element for supporting the microphone (21),
• mechanical means for protecting the microphone against projections from the environment of the vehicle and from airborne noise originating from the routing of the sound wave between the source and the measurement as well as from the environment of the measuring system, these mechanical means comprising comprise a protective cover (30) comprising a deflector (32) installed between the microphone and the noise source with two vanes (33) at its ends, positioned in such a way that it creates secondary channels between the interior and the air around the protective cover,
• mechanical means for protecting the microphone against noise transmitted by conduction in a solid and originating from the vehicle, comprising a damping base (11) with differential stiffnesses between its central part and its fixing attachments at the ends,
• metal claws (10) enabling attachment of the system to the metal seam.

2. Measurement system according to Claim 1, in which the element for supporting the microphone comprises a polygonal seat circumscribed by a cone.

3. Measurement system according to any one of the preceding claims in which the mechanical protection means comprise lateral lugs installed on the support element.

4. Motor vehicle comprising a sound measurement system according to any one of the preceding claims installed on the body of the vehicle in the vicinity of a front wheel of the vehicle.

5. Motor vehicle comprising a sound measurement system according to any one of Claims 1 to 3 installed on the body of the vehicle in the vicinity of a rear wheel of the vehicle.

6. Motor vehicle comprising at least two sound measurement systems according to any one of Claims 1 to 3.
